Europäisches Patentamt

European Patent Office

Office européen des brevets

(19)

(11) Numéro de publication : **0 022 717**
**B1**

(12) **FASCICULE DE BREVET EUROPÉEN**

(45) Date de publication du fascicule du brevet :
26.01.83

(21) Numéro de dépôt : **80401040.3**

(22) Date de dépôt : **10.07.80**

(51) Int. Cl.³ : **C 09 K   5/06**

(54) Procédé de stockage de la chaleur par des compositions contenant au moins un hydrocarbure aliphatique saturé et application d'un tel procédé.

(30) Priorité : **11.07.79 FR 7917972**

(43) Date de publication de la demande :
**21.01.81 Bulletin 81/03**

(45) Mention de la délivrance du brevet :
**26.01.83 Bulletin 83/04**

(84) Etats contractants désignés :
**AT BE CH DE GB IT LI NL SE**

(56) Documents cités :
**GB A 1 312 900**
**US A 2 726 211**
**US A 2 785 132**
**US A 4 100 092**

(73) Titulaire : **COMPAGNIE FRANCAISE DE RAFFINAGE**
**Société anonyme dite:**
**5, rue Michel-Ange**
**F-75781 Paris Cedex 16 (FR)**

(72) Inventeur : **Cadet, André**
**15, avenue Foch**
**F-76600 Le Havre (FR)**

(74) Mandataire : **Jolly, Jean-Pierre et al**
**Cabinet BROT 83, rue d'Amsterdam**
**F-75008 Paris (FR)**

Jouve, 18, rue St-Denis, 75001 Paris, France

Procédé de stockage de la chaleur par des compositions contenant au moins un hydrocarbure aliphatique saturé et application d'un tel procédé

La présente invention concerne un procédé de stockage de la chaleur par des compositions contenant au moins un hydrocarbure aliphatique saturé.

Le problème posé par le stockage de la chaleur provenant d'une source qui ne fournit de l'énergie calorifique que de façon intermittente a fait l'objet de nombreuses études. C'est en particulier le cas du stockage de la chaleur d'origine solaire, qu'il est souhaitable de pouvoir utiliser en dehors des périodes d'ensoleillement, par exemple la nuit.

Parmi les matériaux qui peuvent être employés comme réserves de calories, on a proposé des matières qui stockent les calories sans changer d'état physique, notamment de l'eau. On fait appel dans ce cas à la chaleur spécifique.

On a également proposé des matières qui changent d'état lors du stockage ; ce sont des matières à chaleur latente de fusion élevée, comme les hydrates de sels, tels que l'hydrate de sulfate de sodium $Na_2SO_4 \cdot 10\ H_2O$, ou les hydrocarbures paraffiniques solides à température ambiante. Il peut d'ailleurs s'agir, dans ce cas, d'un hydrocarbure paraffinique bien défini ou d'un mélange d'hydrocarbures.

On a aussi proposé d'utiliser des mélanges d'au moins deux composés ayant des points de fusion différents, par exemple des mélanges paraffine/paraffine, acide gras/acide gras, alcool/acide gras et diphényl éther/acide oléique/acide stéarique (US-A-2 726 211 et US-A-4 100 092).

L'utilisation de tels composés ou de tels mélanges nécessite cependant que ceux-ci possèdent des propriétés particulières, notamment :
— un point de fusion suffisamment bas ;
— un point de fusion bien défini, dans le cas de mélanges, car la différence de densité entre la phase solide et la phase liquide crée une ségrégation qui réduit la chaleur latente utilisable ;
— une grande inertie chimique pour éviter la corrosion des équipements.

Ces propriétés particulières ne sont pas toujours possédées par les hydrocarbures paraffiniques ou autres composés disponibles et notamment par les mélanges d'hydrocarbures provenant du raffinage du pétrole brut.

Les travaux effectués par la Demanderesse lui ont permis de concevoir un moyen facilitant l'utilisation des hydrocarbures aliphatiques saturés pour le stockage de la chaleur.

Le but de la présente invention est donc le stockage de la chaleur par les hydrocarbures aliphatiques saturés.

A cet effet, l'invention a pour objet un procédé de stockage de la chaleur par une composition contenant au moins un hydrocarbure aliphatique saturé, caractérisé en ce que la composition contient en outre au moins un acide gras ayant au moins 10 atomes de carbone.

Dans le procédé selon la présente invention, l'hydrocarbure aliphatique saturé — ou le mélange d'hydrocarbures aliphatiques saturés — entrant dans la composition utilisée pour le stockage de la chaleur peut avoir un point de fusion égal ou supérieur à 20 °C.

Il peut s'agir notamment des produits provenant du raffinage du pétrole brut et connus sous le nom de « paraffine », de « cire » et de « pétrolatum ».

La « paraffine » est un mélange d'hydrocarbures saturés, comportant une structure cristalline et dont la température de fusion est comprise entre 35 °C et 66 °C ; la majeure partie de la « paraffine » est constituée par des hydrocarbures aliphatiques saturés linéaires ; la teneur en huile est généralement inférieure à 5 % en poids et, de préférence, inférieure à 1 %.

La « cire » est un mélange d'hydrocarbures saturés de masses moléculaires plus élevées que la paraffine ; une cire comporte plus de molécules cycliques et ramifiées et est également plus riche en huile que la paraffine ; la cire est amorphe, sa température de fusion est comprise entre 66 et 100 °C.

Le « pétrolatum » est un mélange d'hydrocarbures saturés obtenu lors de la préparation de la « paraffine » ou de la « cire » par déparaffinage de l'huile. Il peut contenir jusqu'à 25 % en poids d'huile et avoir un point de fusion compris entre 20 et 50 °C.

L'hydrocarbure saturé ou le mélange d'hydrocarbures saturés peut contenir des antioxydants comme, par exemple, le butylhydroxylanisole ou le butylhydroxytoluol.

Les compositions utilisables dans le procédé selon l'invention contiennent en outre au moins un acide gras, ou un mélange de tels acides, dont la nature et le pourcentage en poids dans la composition varient selon la nature de l'hydrocarbure ou du mélange d'hydrocarbures entrant dans la composition.

L'acide gras peut avoir un nombre d'atomes de carbone égal ou supérieur à 10 et peut être, par exemple, choisi dans le groupe constitué par l'acide stéarique, l'acide palmitique ou l'acide caprique. L'acide gras, ou le mélange d'acides gras, peut être pur ou plus ou moins purifié ; il peut contenir notamment les produits à partir desquels il a été préparé.

L'addition d'un acide gras, ou d'un mélange de tels acides, à l'hydrocarbure saturé ou au mélange de tels hydrocarbures, permet la formation d'un composé eutectique ayant un point de fusion plus bas que l'acide et l'hydrocarbure, ce point de fusion étant de plus bien défini.

Le choix des constituants de la composition à utiliser et des teneurs de ces constituants dépendra de l'application envisagée de la température d'emploi de la composition.

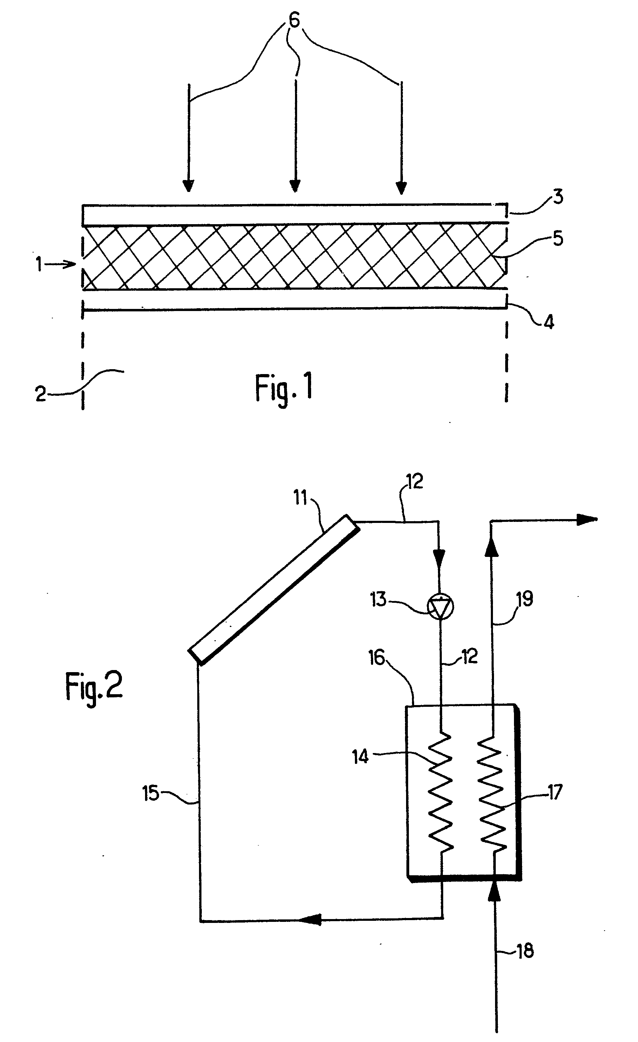

La chaleur solaire est stockée par cette composition. Cette chaleur peut être utilisée pour la production d'eau chaude sanitaire comme représenté sur la figure 2. A cet effet, la capacité 16 est équipée d'un échangeur 17 alimenté en eau froide par la ligne 18. Après réchauffage grâce à l'échangeur 17, l'eau réchauffée ressort de la capacité 16 par la ligne 19 pour être conduite vers le poste d'utilisation.

La chaleur solaire est stockée par la composition contenue dans la capacité 16 pendant les périodes d'ensoleillement, pour être restituée à l'eau de l'échangeur 17, quand celle-ci est soutirée. Lorsque la chaleur fournie par l'énergie solaire n'est pas suffisante, l'eau de la ligne 19 peut subir un deuxième réchauffage par une source de chaleur annexe (électricité, chaudière à mazout ou gaz), comme décrit par exemple dans le FR-A-2 403 524, dont la Demanderesse est titulaire.

## Revendications

1. Procédé de stockage de la chaleur par des compositions contenant au moins un hydrocarbure aliphatique saturé, caractérisé en ce que la composition contient en outre au moins un acide gras ayant au moins 10 atomes de carbone.

2. Procédé selon la revendication 1, caractérisé en ce que l'hydrocarbure saturé ou le mélange d'hydrocarbures saturés a un point de fusion égal ou supérieur à 20 °C.

3. Procédé selon l'une des revendications 1 ou 2, caractérisé en ce que le mélange d'hydrocarbures saturés est constitué par de la paraffine.

4. Procédé selon l'une des revendications 1 ou 2, caractérisé en ce que le mélange d'hydrocarbures saturés est constitué par de la cire.

5. Procédé selon l'une des revendications 1 ou 2, caractérisé en ce que le mélange d'hydrocarbures saturés est constitué par du pétrolatum.

6. Procédé selon l'une des revendications 1 à 5, caractérisé en ce que l'acide gras est l'acide stéarique, l'acide palmitique et l'acide caprique.

7. Application du procédé selon l'une des revendications 1 à 6, au stockage de la chaleur d'origine solaire.

## Claims

1. A process for storing heat by means of compositions containing at least one saturated aliphatic hydrocarbon, characterized in that the composition further contains at least one fatty acid having at least 10 carbon atoms.

2. The process according to claim 1, characterized in that the saturated hydrocarbon or the mixture of saturated hydrocarbons has a melting point equal to or greater than 20 °C.

3. The process according to one of claims 1 or 2, characterized in that the mixture of saturated hydrocarbons is formed by paraffin.

4. The process according to any one of claims 1 or 2, characterized in that the mixture of saturated hydrocarbons is formed by wax.

5. The process according to one of claims 1 or 2, characterized in that the mixture of saturated hydrocarbons is formed by petrolatum.

6. The process according to one of claims 1 to 5, characterized in that the fatty acid is stearic acid, palmitic acid or capric acid.

7. Application of the process according to one of claims 1 to 6, to the storage of heat of solar origin.

## Ansprüche

1. Verfahren zur Wärmespeicherung mittels Kompositionen, welche mindestens einen gesättigten aliphatischen Kohlenwasserstoff enthalten, dadurch gekennzeichnet, daß die Komposition zusätzlich mindestens eine Fettsäure mit wenigstens 10 Kohlenstoffatomen enthält.

2. Verfahren nach Anspruch 1, dadurch gekennzeichnet, daß der gesättigte Kohlenwasserstoff oder das Gemisch gesättigter Kohlenwasserstoffe einen Schmelzpunkt gleich oder höher als 20 °C aufweist.

3. Verfahren nach Anspruch 1 oder 2, dadurch gekennzeichnet, daß das Gemisch gesättigter Kohlenwasserstoffe aus Paraffin besteht.

4. Verfahren nach Anspruch 1 oder 2, dadurch gekennzeichnet, daß das Gemisch gesättigter Kohlenwasserstoffe aus Wachs besteht.

5. Verfahren nach Anspruch 1 oder 2, dadurch gekennzeichnet, daß das Gemisch gesättigter Kohlenwasserstoffe aus Petrolatum besteht.

6. Verfahren nach einem der Ansprüche 1 bis 5, dadurch gekennzeichnet, daß die Fettsäure Stearinsäure, Palmitinsäure und Decylsäure ist.

7. Anwendung des Verfahrens nach einem der Ansprüche 1 bis 6 auf die Speicherung von Sonnenwärme.

Fig.1

Fig.2